# EUROPEAN PATENT APPLICATION

(11) **EP 4 797 375 A1**
(43) Date of publication of application: **26.08.2026**
(21) Application number: 25860986.6
(22) Date of filing: 22.08.2025
(51) Int. Cl.: H01M 10/42, G01B 7/16

(54) **BATTERY CELL INSPECTION DEVICE**

(30) Priority: 29.08.2024 KR 20240116904
(71) Applicant: LG Energy Solution, Ltd., Seoul 07335 (KR)
(72) Inventor: JEONG, Seoyoung, Daejeon 34122 (KR); KWON, Kyeongkeun, Daejeon 34122 (KR); LEE, Sangjae, Daejeon 34122 (KR)
(74) Representative: Goddar, Heinz J.
(86) International application number: PCT/KR2025/012766
(87) International publication number: WO 2026/049420

(57) **Abstract**

A battery cell inspection device according to an embodiment of the present disclosure comprises an electrode assembly and a battery case in which the electrode assembly is mounted, with the battery cell inspection device comprising a sensor unit that faces at least one end of the battery cell, wherein the sensor unit is spaced from one end of the battery cell by a limit height before a venting phenomenon occurs in the battery cell, and detects whether one end of the battery cell has swelled to the limit height, and wherein the limit height is the height to which one end of the battery cell has swelled just before being vented due to gas generated within the battery cell.

## Description

### [TECHNICAL FIELD]

### Cross Citation with Related Application(s)

This application claims priority to and the benefit of Korean Patent Application No. 10-2024-0116904, filed on August 29, 2024, the disclosure of which is incorporated herein by reference in its entirety.

The present disclosure relate to a battery cell inspection device, and more particularly, to a battery cell inspection device in which an inspection test for the battery cell is terminated before a venting phenomenon of the battery cell occurs in the progress steps of an inspection test for the battery cell, thereby enabling analysis of the inside of the battery cell just before being vented while preventing secondary damage.

### [BACKGROUND]

Along with the technology development and increased demand for mobile devices, demand for secondary batteries as energy sources has been increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery is classified into a cylindrical battery where an electrode assembly is mounted in a cylindrical metal can, a prismatic battery where an electrode assembly is mounted in a prismatic metal can, and a pouch-type battery where an electrode assembly is mounted into a pouch type case formed of an aluminum laminate sheet. Here, the electrode assembly mounted in the battery case is an electricity-generating device enabling charge and discharge that has a structure of a positive electrode, a negative electrode, and a separator interposed between the positive electrode and the negative electrode, and is divided into a jelly-roll type in which an electrode assembly including a separator interposed between the positive electrode and the negative electrode, each made of an active material-coated long sheet, is rolled, and a stack-type in which a plurality of positive electrodes and a plurality of negative electrodes are stacked in this order such that a separator is interposed between the positive electrode and the negative electrode.

Among them, in particular, a pouch-type battery having a structure in which a stack-type or stack/folding-type electrode assembly is mounted in a pouch-type battery case of an aluminum laminate sheet is gradually increasing in its usage amount due to low manufacturing cost, small weight, easy deformation, and the like.

In the process of evaluating the performance of such secondary batteries, a venting phenomenon occur in the secondary battery. Here, the venting phenomenon refers to a process in which gas is generated during the decomposition of the electrolyte inside the secondary battery, and when the generated gas causes the secondary battery to swell beyond a critical point, the gas is released to the outside of the secondary battery.

At this time, conventionally, when a venting phenomenon occurred in a secondary battery, the gas released outside the secondary battery was detected, and venting notification and inspection testing were terminated. However, in the case of secondary batteries where a venting phenomenon has already occurred, there is a problem that it is difficult to conduct various analyses of the battery cells, and it is likely to result in secondary damage such as fire occurrence and electrolyte leakage contamination.

Therefore, there is a need to develop a battery cell inspection device that terminates the inspection test for the secondary battery or issues an alarm for venting risk before the venting phenomenon of the secondary battery occurs in the progress steps of an inspection test for a battery cell.

### [DETAILED DESCRIPTION OF THE INVENTION[]

### [Technical Problem]

It is an object of the present disclosure to provide a battery cell inspection device in which an inspection test for the battery cell is terminated before a venting phenomenon of the battery cell occurs in the progress steps of an inspection test for the battery cell, thereby enabling analysis of the inside of the battery cell just before being vented while preventing secondary damage.

However, the technical objects to be solved by embodiments of the present disclosure are not limited to the above-described objects, and can be variously expanded within the scope of the technical idea included in the present disclosure.

### [Technical Solution]

In an illustrative aspect of the present disclosure, provided is a battery cell inspection device, comprising an electrode assembly and a battery case in which the electrode assembly is mounted, with the battery cell inspection device comprising a sensor unit that faces at least one end of the battery cell, wherein the sensor unit is spaced from one end of the battery cell by a limit height before a venting phenomenon occurs in the battery cell, and detects whether one end of the battery cell has swelled to the limit height, and wherein the limit height is the height to which one end of the battery cell has swelled just before being vented due to gas generated within the battery cell.

In an embodiment, the sensor unit may be a contact type displacement sensor.

In an embodiment, a spring member may be fastened to the inside of the sensor unit, and the sensor unit may electrically convert a position displacement information of the spring member.

In an embodiment, the battery cell inspection device may further comprise a control member that terminates inspection of the battery cell or issues an alarm for venting risk of the battery cell, when the sensor unit detects whether one end of the battery cell has swelled to the limit height.

In an embodiment, the battery cell may include a sealing part in which a part of the outer circumference surface of the battery case is sealed, and the sensor unit may face the sealing part.

In an embodiment, the battery cell may include at least one electrode tab electrically connected to the electrode assembly, with the electrode tab being protruded outside the sealing part, and the sensor unit may face a part where the electrode tab is located among the sealing part.

In an embodiment, the sensor unit may face the central area of the part where the electrode tab is located among the sealing part.

In an embodiment, the sensor unit may face an area adjacent to the outside of the sealing part, among the parts where the electrode tabs are located among the sealing part.

In an embodiment, the sensor unit may be formed in plural numbers, and the plurality of sensor unit may be arranged at equal intervals at the portion where the electrode tab is located among the sealing part.

In an embodiment, the battery cell inspection may further comprise a battery cell fastening part that fixes one end of the battery cell, wherein the battery cell fastening part may include a fastening hole into which one end of the battery cell is inserted.

In an embodiment, the sensor unit may include a sensor support part extending along at least one surface of the battery cell fastening part, and a venting detection sensor extending from the sensor support part in a direction facing one end of the battery cell.

In an embodiment, the sensor support part may be adjusted in a position on the basis of the vertical direction of the battery cell fastening part, and the sensor support part may be adjusted in a position so that a distance between one end of the venting detection sensor and one end of the battery cell is spaced apart by the limit height.

In an embodiment, the sensor unit includes a first sensor unit and a second sensor unit, the first sensor unit includes a first sensor support part located at an upper part of the fastening hole, and a first venting detection sensor extending from the first sensor support part in a direction facing the upper surface of one end of the battery cell, and the second sensor unit includes a second sensor support part located at a lower part of the fastening hole, and a second venting detection sensor extending from the second sensor support part in a direction facing the lower surface of one end of the battery cell.

In an embodiment, the battery cell fastening part may further comprise a size adjustment part that adjusts the size of the fastening hole on the basis of the vertical direction of the fastening hole, and the size adjustment part may adjust the size of the fastening hole in accordance with the height of one end of the battery cell.

In an embodiment, the battery cell inspection device may further comprise a chamber in which the battery cell is housed, wherein the sensor unit may be mounted inside the chamber.

### [Advantageous Effects]

According to specific embodiments, the battery cell inspection device of the present disclosure includes a sensor unit capable of detecting the presence or absence of venting in a battery cell in advance, and thus has advantages in that an inspection test for the battery cell is terminated before a venting phenomenon of the battery cell occurs in the progress steps of an inspection test for the battery cell, thereby enabling analysis of the inside of the battery cell just before being vented while preventing secondary damage.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view illustrating a battery cell inspection device according to an embodiment of the present disclosure.
FIG. 2 is a diagram illustrating a battery cell fastening part and a sensor unit included in the battery cell inspection device of FIG. 1.
FIG. 3 is a perspective view illustrating a battery cell being inspected by the battery cell inspection device of FIG. 1.
FIG. 4 is an enlarged view of the sensor unit and the battery cell in the battery cell inspection device of FIG. 1.
FIG. 5 is a perspective view illustrating a battery cell inspection device according to another embodiment of the present disclosure.
FIG. 6 is a diagram illustrating a battery cell fastening part and a sensor unit included in the battery cell inspection device of FIG. 5.
FIG. 7 is a perspective view illustrating a battery cell inspected by the battery cell inspection device of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, the battery cell inspection device according to an embodiment of the present disclosure will be described.

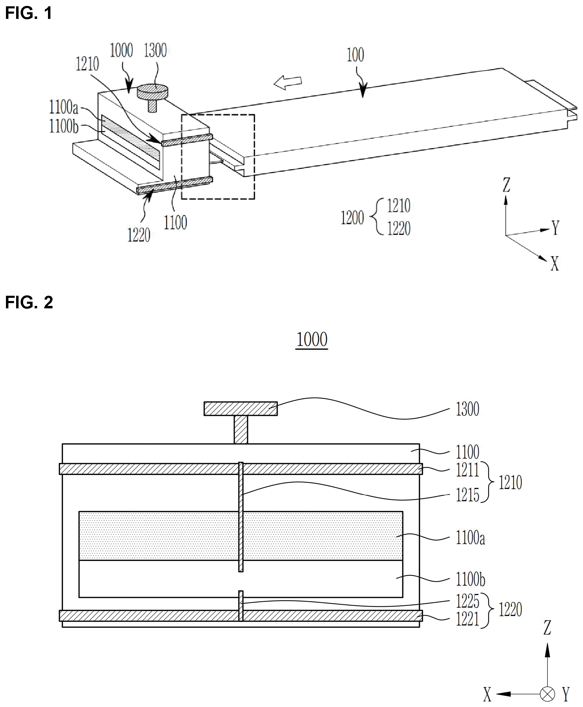

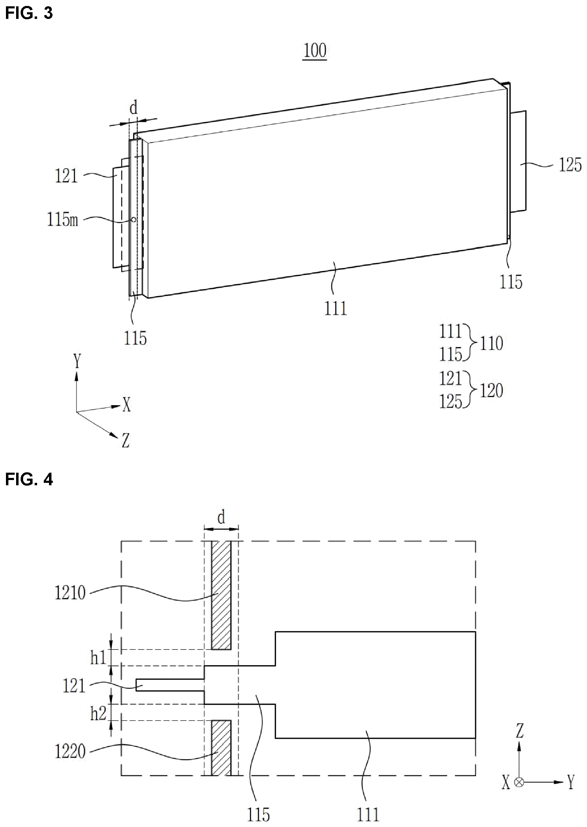

FIG. 1 is a perspective view illustrating a battery cell inspection device according to an embodiment of the present disclosure. FIG. 2 is a diagram illustrating a battery cell fastening part and a sensor unit included in the battery cell inspection device of FIG. 1. FIG. 3 is a perspective view illustrating a battery cell being inspected by the battery cell inspection device of FIG. 1. FIG. 4 is an enlarged view of the sensor unit and the battery cell in the battery cell inspection device of FIG. 1.

Referring to FIGS. 1 to 4, a battery cell inspection device 1000 according to an embodiment of the present disclosure is a device for conducting an inspection test for a battery cell 100, which includes an electrode assembly and a battery case in which the electrode assembly is mounted.

Referring to FIG. 3, the battery cell 100 may be a pouch type battery cell. More specifically, the battery cell 100 may have a structure in which an electrode assembly (not shown) is housed in a battery case 110 made of a laminate sheet. Here, the main body 111 of the battery cell 100 may be the portion where the electrode assembly (not shown) is located. In addition, the battery cell 100 may be manufactured by housing the electrode assembly (not shown) in the battery case 110 and then thermally fusing the sealing part 115 of the battery case 110. Here, the sealing part 115 may be formed in such a manner that a part of the outer circumferential surface of the battery case 110 is sealed.

However, the shape of the battery cell 100 is not limited thereto, and the battery cells of shapes such as prismatic or cylindrical may also be included in the present embodiment.

In addition, the battery cell 100 includes at least one electrode tab 120 electrically connected to an electrode assembly (not shown). At least one electrode tab 120 may protrude from at least one end of the battery case 110 to the outside of the battery case 110. As an example, as shown in FIG. 3, at least one electrode tab 120 may be located in the sealing part 115 of the battery case 110, and at least one electrode tab 120 may protrude to the outside of the sealing part 115.

Here, at least one electrode tab 120 includes a first electrode tab 121 and a second electrode tab 125, wherein one of the first electrode tab 121 and the second electrode tab 125 may correspond to a positive electrode tab, and the other may correspond to a negative electrode tab.

As an example, as shown in FIG. 3, the electrode tabs 120 may protrude from both ends of the battery cell 100 toward the outside of the battery cell 100. However, the present embodiment is not limited thereto, and may also include a case in which a plurality of electrode tabs 120 are located at one end of the battery cell 100.

Referring to FIG. 1, the battery cell inspection device 1000 according to the present embodiment includes a sensor unit 1200 that faces at least one end of a battery cell 100. In addition, the battery cell inspection device 1000 further includes a battery cell fastening part 1100 that fixes at least one end of the battery cell 100. The sensor unit 1200 may be mounted on the battery cell fastening part 1100.

Referring to FIGS. 1 and 2, the battery cell fastening member 1100 may include a fastening hole 1100b into which one end of the battery cell 100 is inserted. Here, the fastening hole 1100b may have a size larger than one end of the battery cell 100, and after one end of the battery cell 100 is inserted into the fastening hole 1100b, the size of the fastening hole 1100b may be adjusted so as to be equal to the height of the one end of the battery cell 100.

More specifically, the battery cell fastening part 1100 further includes a size adjustment part 1300 that adjusts the size of the fastening hole 1100b on the basis of the vertical direction of the fastening hole 1100b. The size adjustment part 1300 can adjust the size of the fastening hole 1100b in accordance with the height of one end of the battery cell 100. As an example, as shown in FIGS. 1 and 2, a fastening plate 1100a may be located at an upper part of the fastening hole 1100b, and the fastening plate 1100a may be located in the vertical direction of the fastening hole 1100b according to the rotation of the size adjustment part 1300.

Referring to FIGS. 1 and 2, the sensor unit 1200 may include a sensor support parts 1211, 1221 extending along at least one surface of the battery cell fastening part 1100, and venting detection sensors 1215, 1225 extending from the sensor support parts 1211, 1221 in a direction facing one end of the battery cell 100.

More specifically, as shown in FIGS. 1 and 2, the sensor support parts 1211, 1221 may extend along one surface of the battery cell fastening part 1100 facing the battery cell 100 and both surfaces connected to the one surface. However, the embodiment is not limited thereto, and the sensor support parts 1211, 1221 may extend along the front surface of the battery cell fastening part 1100.

Thereby, in the battery cell inspection device 1000 according to the present embodiment, the sensor unit 1200 may be stably fixed to the battery cell fastening part 1100 via the sensor support parts 1211, 1221.

In addition, the sensor support parts 1211, 1221 may be adjusted in a position on the basis of the vertical direction of the battery cell fastening part 1100. More specifically, as described later in FIG. 4, the sensor support parts 1211, 1221 may be adjusted in a position so that the distance between one end of the venting detection sensors 1215, 1225 and one end of the battery cell 100 is spaced apart by the limit heights h1, h2.

Thereby, in the battery cell inspection device 1000 according to the present embodiment, the sensor unit 1200 may easily adjust the distance between one end of the venting detection sensors 1215, 1225 and one end of the battery cell 100 by adjusting the position of the sensor support units 1211, 1221 without the need for additional components.

Further, the sensor unit 1200 may include a plurality of sensor units 1200. As an example, as shown in FIGS. 1 and 2, the sensor unit 1200 includes a first sensor unit 1210 and a second sensor unit 1220. The first sensor unit 1210 may be located at an upper part on the basis of one end of the battery cell 100, and the second sensor unit 1220 may be located at a lower part on the basis of one end of the battery cell 100. In other words, the first sensor unit 1210 may be located at the upper part on the basis of the fastening hole 1100b, and the second sensor unit 1220 may be located at the lower part on the basis of the fastening hole 1100b.

More specifically, the first sensor unit 1210 may include a first sensor support part 1211 located at an upper part of the fastening hole 1100b, and a first venting detection sensor 1215 extending from the first sensor support part 1211 in a direction facing the upper surface of one end of the battery cell 100. The second sensor unit 1220 may also include a second sensor support part 1221 located at a lower part of the fastening hole 1100b, and a second venting detection sensor 1225 extending from the second sensor support part 1221 in a direction facing the lower surface of one end of the battery cell 100.

Thereby, in the battery cell inspection device 1000 according to the present embodiment, the sensor units 1200 may be located at the upper and lower parts on the basis of one end of the battery cell 100, respectively, so that the presence or absence of venting at one end of the battery cell 100 can be effectively detected in advance.

However, the number and location of the sensor units 1200 in the battery cell inspection device 1000 according to the present embodiment are not limited thereto, and embodiments in which either the first sensor unit 1210 or the second sensor unit 1220 is omitted may also be included in the present embodiment.

Although not illustrated in FIGS. 1 and 2, a battery cell inspection device 1000 according to another embodiment may be configured such that the battery cell fastening part 1100 may be replaced with a chamber (not shown) that houses the battery cell 100, and the sensor unit 1200 may be mounted inside the chamber (not shown).

Referring to FIGS. 1 and 2, in the battery cell inspection device 1000 according to the present embodiment, the sensor unit 1200 may face at least one end of the battery cell 100. More specifically, the venting detection sensors 1215, 1225 included in the sensor unit 1200 may face at least one end of the battery cell 100. That is, one end of the venting detection sensors 1215, 1225 may face at least one end of the battery cell 100. For convenience of explanation, the venting detection sensors 1215, 1225 will be described below as the sensor unit 1200.

More specifically, the sensor unit 1200 may face an area where venting phenomenon is highly likely to occur in the battery cell 100. In other words, the sensor unit 1200 may face an area of the battery cell 100 that is vulnerable to the venting phenomenon.

As an example, as shown in FIGS. 1 and 2, the sensor unit 1200 may face the sealing part 115 formed on at least one end of the battery case 110. In particular, the sensor unit 1200 may face the portion where the electrode tab 120 is located in the sealing part 115, and this portion may be indicated as a sensor-facing portion 115m as shown in FIG. 3. As an example, as shown in FIG. 3, the sensor unit 1200 may face the central area of the portion where the electrode tab 120 is located in the sealing part 115.

This is because the sealing part 115 where the electrode tab 120 is located has a relatively weaker sealing strength than the sealing part 115 where the electrode tab 120 is not located, and the sealing part 115 where the electrode tab 120 is located is an area that has a high risk of venting phenomena occurring or is vulnerable to venting phenomena.

As an example, the sensor unit 1200 may face the area d adjacent to the outside of the sealing part 115 where the electrode tab 120 is located. This is because the area d adjacent to the outside of the sealing part 115 where the electrode tab 120 is located corresponds to a location that may rupture when a vent phenomenon occurs.

Thereby, the battery cell inspection device 1000 according to the present embodiment has advantages in that the sensor unit 1200 faces an area that has a high risk of venting phenomena occurring or is vulnerable to venting phenomena in the battery cell 100, so that the presence or absence of venting phenomena in the battery cell 100 can be effectively detected in advance.

Here, the sensor unit 1200 may be a contact type displacement sensor. As an example, the sensor unit 1200 may have a spring member (not shown) fastened to the inside of the sensor unit 1200, and the sensor unit 1200 may electrically convert a position displacement information of the spring member (not shown). However, the embodiment is not limited thereto, and any commonly used contact type displacement sensor may also be included in the present embodiment.

Referring to FIGS. 1, 2, and 4, the first sensor unit 1210 may be spaced apart from the upper part of one end of the battery cell 100 by a first limit height h1 before venting phenomena occur in the battery cell 100. As an example, as described above, the first sensor unit 1210 may be spaced apart from the sealing part 115 formed at one end of the battery cell 100 by a first limit height h1 before venting phenomena occur in the battery cell 100. More specifically, the first limit height h1 is the height to which one end of the battery cell 100 is swelled just before being vented due to gas generated inside the battery cell 100.

In addition, the first sensor unit 1210 may detect whether the upper part of one end of the battery cell 100 has swelled to the first limit height h1. As an example, the first sensor unit 1210 may detect whether the upper part of the sealing part 115 formed at one end of the battery cell 100 has swelled to the first limit height h1. More specifically, as one end of the battery cell 100 swells due to gas generated inside the battery cell 100, the first sensor unit 1210 comes into contact with the upper part of the one end of the battery cell 100, thereby making it possible to detect whether the upper part of one end of the battery cell 100 has swelled to the first limit height h1.

The battery cell inspection device 1000 according to the present embodiment may further include a control member (not shown) that terminates inspection of the battery cell 100 or issues an alarm for venting risk of the battery cell 100 when the first sensor unit 1210 detects whether the upper part of one end of the battery cell 100 has swelled to a first limit height h1.

As a result, the battery cell inspection device 1000 according to the present embodiment has the advantages in that the first sensor unit 1210 can detect the first limit height h1, which is the height just before the upper end of one end of the battery cell 100 is vented, and the device induces termination of the inspection test before a venting phenomenon of the battery cell 100 occurs in the progress steps of an inspection test for the battery cell 100, thereby preventing secondary damage such as electrolyte leakage contamination or fire to adjacent battery cells or devices.

In addition, since the inspection test is completed before the venting phenomenon of the battery cell 100 occurs, there is an advantage that the internal analysis of the battery cell just before venting becomes possible.

The above-described contents are mainly given regarding the first sensor unit 1210, but the second sensor unit 1220 differs only in the position from the first sensor unit 1210 and can be described in the same manner as the first sensor unit 1210. In addition, unlike FIGS. 1, 2, and 4, an embodiment in which either the first sensor unit 1210 or the second sensor unit 1220 is omitted may also be included in this embodiment.

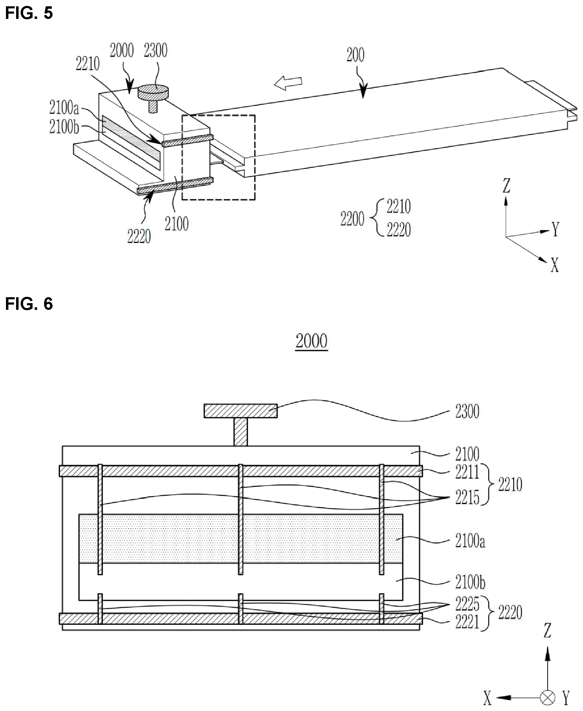

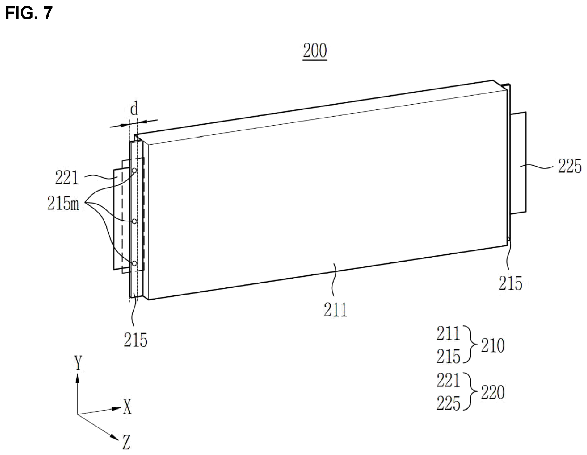

FIG. 5 is a perspective view illustrating a battery cell inspection device according to another embodiment of the present disclosure. FIG. 6 is a diagram illustrating a battery cell fastening part and a sensor unit included in the battery cell inspection device of FIG. 5. FIG. 7 is a perspective view illustrating a battery cell inspected by the battery cell inspection device of FIG. 5.

The battery cell inspection device 2000 according to the present embodiment can be described in almost the same manner as the battery cell inspection device 1000 described above, and only the differences will be described below.

The battery cell inspection device 2000 according to the present embodiment may include a plurality of sensor units 2200 and a plurality of venting detection sensors 2211, 2221. As an example, as shown in FIGS. 5 and 6, the plurality of venting detection sensors 2211, 2221 may be arranged at equal intervals in the sealing part 215 where the electrode tabs 220 are located. However, the number and spacing of the plurality of venting detection sensors 2211, 2221 are not limited thereto, and may be appropriately adjusted as needed.

Therefore, the battery cell inspection device 2000 according to the present embodiment has advantages in that since the plurality of venting detection sensors 2211, 2221 included in the sensor unit 2200 face the sealing part 215 of the battery cell 100 at a fixed interval, the limit height h1, h2 just before one end of the battery cell 100 is vented can be detected more precisely.

Although preferred embodiments of the present disclosure have been illustrated and described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

100: battery cell
110: battery case
111: main body
115: sealing part
115m: sensor-facing part
120: electrode tab
121: first electrode tab
125: second electrode tab
1000: battery cell inspection device
1100: battery cell fastening part
1200: sensor unit
1211, 1221: sensor support part
1215, 1225: venting detection sensor
1300: size adjustment part

## Claims

1. A battery cell inspection device, comprising an electrode assembly and a battery case in which the electrode assembly is mounted, with the battery cell inspection device comprising a sensor unit that faces at least one end of the battery cell,
wherein the sensor unit is spaced from one end of the battery cell by a limit height before a venting phenomenon occurs in the battery cell, and detects whether one end of the battery cell has swelled to the limit height, and
wherein the limit height is the height to which one end of the battery cell has swelled just before being vented due to gas generated within the battery cell.

2. The battery cell inspection device of claim 1,
wherein the sensor unit is a contact type displacement sensor.

3. The battery cell inspection device of claim 2,
wherein a spring member is fastened to the inside of the sensor unit, and
the sensor unit electrically converts a position displacement information of the spring member.

4. The battery cell inspection device of claim 1,
further comprising a control member that terminates inspection of the battery cell or issues an alarm for venting risk of the battery cell, when the sensor unit detects whether one end of the battery cell has swelled to the limit height.

5. The battery cell inspection device of claim 1,
whether the battery cell comprises a sealing part in which a part of the outer circumference surface of the battery case is sealed, and
the sensor unit faces the sealing part.

6. The battery cell inspection device of claim 5,
whether the battery cell comprises at least one electrode tab electrically connected to the electrode assembly, with the electrode tab being protruded outside the sealing part, and
the sensor unit faces a part where the electrode tab is located among the sealing part.

7. The battery cell inspection device of claim 6,
whether the sensor unit faces the central area of the part where the electrode tab is located among the sealing part.

8. The battery cell inspection device of claim 6,
whether the sensor unit faces an area adjacent to the outside of the sealing part, among the parts where the electrode tabs are located among the sealing part.

9. The battery cell inspection device of claim 6,
whether the sensor unit is formed in plural numbers, and the plurality of sensor unit are arranged at equal intervals at the portion where the electrode tab is located among the sealing part.

10. The battery cell inspection device of claim 1,
further comprising a battery cell fastening part that fixes one end of the battery cell,
wherein the battery cell fastening part comprises a fastening hole into which one end of the battery cell is inserted.

11. The battery cell inspection device of claim 10,
wherein the sensor unit includes a sensor support part extending along at least one surface of the battery cell fastening part, and a venting detection sensor extending from the sensor support part in a direction facing one end of the battery cell.

12. The battery cell inspection device of claim 11,
wherein the sensor support part is adjusted in a position on the basis of the vertical direction of the battery cell fastening part, and
the sensor support part is adjusted in a position so that a distance between one end of the venting detection sensor and one end of the battery cell is spaced apart by the limit height.

13. The battery cell inspection device of claim 11,
wherein the sensor unit comprises a first sensor unit and a second sensor unit,
the first sensor unit comprises a first sensor support part located at an upper part of the fastening hole, and a first venting detection sensor extending from the first sensor support part in a direction facing the upper surface of one end of the battery cell, and
the second sensor unit comprises a second sensor support part located at a lower part of the fastening hole, and a second venting detection sensor extending from the second sensor support part in a direction facing the lower surface of one end of the battery cell.

14. The battery cell inspection device of claim 10,
wherein the battery cell fastening part further comprises a size adjustment part that adjusts the size of the fastening hole on the basis of the vertical direction of the fastening hole, and
the size adjustment part adjusts the size of the fastening hole in accordance with the height of one end of the battery cell.

15. The battery cell inspection device of claim 1,
further comprising a chamber in which the battery cell is housed,
wherein the sensor unit is mounted inside the chamber.
